# FASCICULE DE BREVET EUROPEEN

(11) **EP 2 850 347 B1**
(45) Date de publication et mention de la délivrance du brevet: **06.09.2017**
(21) Numéro de dépôt: 13723886.1
(22) Date de dépôt: 26.04.2013
(51) Int. Cl.: F02M 26/70

(54) **VANNE DE CONTRÔLE MOTEUR**
MOTORREGELVENTIL
ENGINE CONTROL VALVE

(30) Priorité: 15.05.2012 FR 1254430
(43) Date de publication de la demande: 25.03.2015
(73) Titulaire: Valeo Systèmes de Contrôle Moteur, 95800 Cergy (FR)
(72) Inventeur: HODEBOURG, Grégory, F-Sartrouville 78500 (FR)
(74) Mandataire: Garcia, Christine
(86) Numéro de dépôt international: PCT/FR2013/050937
(87) Numéro de publication internationale: WO 2013/171394

(56) Documents cités:
- WO-A1-2012/001282
- FR-A1- 2 933 469
- US-A1- 2010 148 107

## Description

L'invention se rapporte à une vanne de contrôle moteur à étanchéité améliorée.

La vanne peut être intégrée au circuit d'air d'un moteur thermique.

Au sens de l'invention, on désigne par « circuit d'air de moteur thermique » le circuit entre l'entrée d'admission et la sortie d'échappement du moteur thermique. La vanne peut être disposée dans le circuit d'admission, le circuit d'échappement, ou une boucle de recirculation par laquelle transitent les gaz d'échappement réinjectés à l'admission (EGR en anglais).

Ce type de vanne peut, par exemple, équiper un circuit d'alimentation en gaz d'un moteur thermique de véhicule, notamment pour réguler le débit des gaz EGR (de l'anglais *Exhaust Gas Recirculation*) dans une boucle permettant de ponctionner une partie des gaz d'échappement en sortie de moteur, pour les réinjecter en amont dudit moteur, dans le circuit d'admission. Le principe de fonctionnement de ce type de vanne repose sur la rotation commandée d'un volet, pouvant passer d'une position d'ouverture complète pour laisser passer le fluide, à une position de fermeture pour bloquer ce passage. L'invention a pour objet une vanne de contrôle moteur à étanchéité améliorée.

Une vanne de contrôle moteur possède donc un volet, qui est monté pivotant sur un axe de rotation, de sorte que ledit axe sépare le volet en une première partie et en une deuxième partie. Il est à préciser qu'aucune limite physique ne matérialise la frontière entre la première et la deuxième partie du volet, lesdites parties étant séparées fictivement par un plan passant par l'axe de rotation du volet et coupant ledit volet perpendiculairement. Lorsque ce volet se retrouve dans une position de fermeture, il vient au contact d'un joint d'étanchéité, qui est solidaire de la structure interne de la vanne. Plus précisément, la première partie vient au contact d'une face du joint, tandis que la deuxième partie dudit volet vient de préférence en regard de la face opposée dudit joint, en maintenant un léger jeu pour éviter l'hyperstatisme.

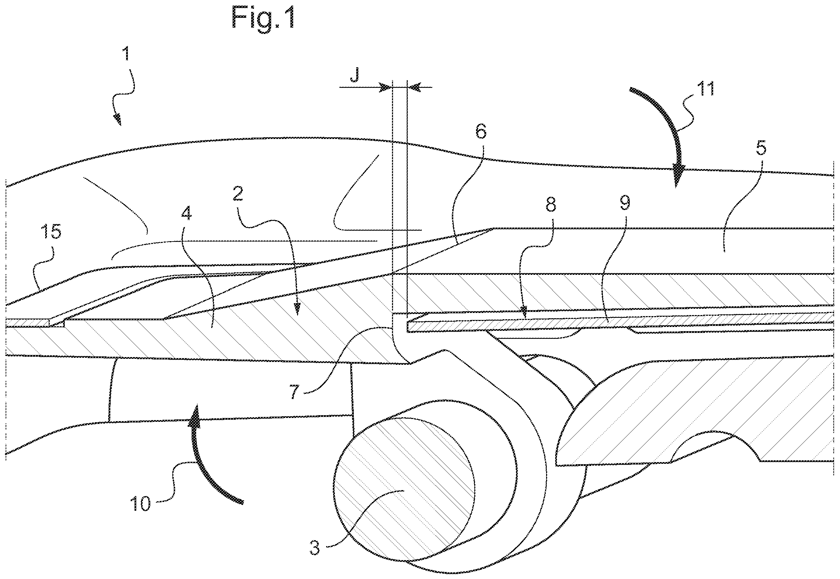

En effet, en se référant à la figure 1, une vanne 1 de contrôle moteur de l'état de la technique comprend un volet 2 monté pivotant autour d'un axe de rotation 3, séparant ledit volet 2 en une première partie 4 et une deuxième partie 5, lesdites parties 4,5 étant reliées l'une à l'autre de façon rigide et en continuité l'une de l'autre. Le volet 2 a globalement la forme d'un parallélépipède rectangle de faible épaisseur, dont l'axe longitudinal est perpendiculaire à l'axe de rotation 3, ledit axe 3 traversant ledit volet 2 de façon asymétrique. Ainsi, la première partie 4 a une forme rectangulaire, dont l'axe longitudinal est parallèle à l'axe de rotation 3, et la deuxième partie 5 a également une forme rectangulaire, dont l'axe longitudinal est perpendiculaire audit axe 3 de rotation. La deuxième partie 5 du volet 2 possède une épaisseur constante, tandis que la première partie 4 présente différentes épaisseurs. L'épaisseur de la première partie 4 du volet 2 est supérieure à celle de la deuxième partie 5 au niveau de ladite zone de jonction 6, si bien qu'elle crée un épaulement 7 entre lesdites parties 4,5, qui s'étend entre la deuxième partie 5 dudit volet 2 et l'axe de rotation 3, dans un plan perpendiculaire à ladite deuxième partie 5. Le joint 8 de la structure interne de la vanne 1, contre lequel vient en appui le volet 2 lorsque celui-ci se retrouve dans une position de fermeture, est plan et comprend une première portion apte à interagir avec la première partie 4 du volet 2, et une deuxième portion 9 destinée à interagir avec la deuxième partie 5 du volet 2. Les deux portions 9 du joint sont planes et en continuité l'une de l'autre. En se référant à la figure 1, quand le volet 2 pivote pour se fermer, la première partie 4 remonte dans le sens indiqué par la première flèche 10, pour venir au contact de la face inférieure de la première portion du joint 8, tandis que la deuxième partie 5 du volet 2 se rabat sur la face supérieure de la deuxième portion 9 dudit joint 8, dans le sens indiqué par la deuxième flèche 11.

Or, un problème rencontré de façon récurrente avec une telle configuration de volet 2, est qu'il subsiste un jeu J entre l'épaulement 7 dudit volet 2 et une extrémité de la deuxième portion 9 du joint 8, lorsque le volet 2 est dans une position de fermeture. Ce jeu J constitue un passage non souhaité pour les gaz, et va donc contribuer à dégrader l'étanchéité de la vanne.

Une vanne de contrôle moteur selon l'invention a subi une modification structurelle, afin de limiter l'effet de ce jeu, et d'augmenter l'étanchéité de la vanne lorsqu'elle se retrouve dans une position de fermeture.

L'invention a pour objet une vanne de contrôle moteur, comprenant un volet monté pivotant sur un axe séparant ledit volet en une première partie et une deuxième partie se joignant au niveau d'un plan d'interface définissant un épaulement, ledit volet étant apte à occuper une position de fermeture pour stopper le passage des gaz, et pour laquelle la première partie interagit avec une première portion d'un joint et la deuxième partie interagit avec une deuxième portion de ce joint, ledit joint étant solidaire de la structure interne de la vanne. La principale caractéristique technique d'une vanne selon l'invention est que la première partie du volet comprend une avancée qui prend naissance sur l'épaulement et qui s'étend parallèlement à la deuxième partie dudit volet. Cette avancée, qui s'étend parallèlement à la deuxième partie du volet, a pour but de combler le jeu J entrevu sur les vannes existantes entre la deuxième portion du joint et l'épaulement marquant la frontière entre la première et la deuxième partie du volet, lorsque le volet est dans une position de fermeture. Ainsi, cette avancée est destinée à venir au contact de la deuxième portion du joint pour éliminer ce jeu. Cette avancée est de faible dimension afin de ne pas entraver le mécanisme d'ouverture ou de fermeture de la vanne.

La vanne peut être configurée de manière à ce que l'interaction entre le volet et le joint induise une déformation du joint et non une compression de ce dernier, contrairement à l'enseignement de la demande US 2010/0148107 selon lequel l'étanchéité de la vanne en position fermée implique une compression de deux joints avec le volet. La déformation peut correspondre à un déplacement de l'ensemble de la portion du joint interagissant avec le volet.

Les portions du joint interagissant avec le volet peuvent être disposées en porte à faux par rapport à la structure interne de la vanne. Ces portions peuvent ainsi faire saillie dans le conduit au niveau de la vanne.

La vanne peut être une vanne trois voies, c'est-à-dire qu'elle permet la répartition d'un fluide entre trois canaux, par exemple d'une entrée vers l'une et/ou l'autre de deux sorties ou depuis une première et/ou une deuxième entrée vers une seule sortie.

L'axe peut être déporté par rapport au volet, c'est-à-dire qu'il existe des plans coupant l'axe sans couper le volet, et réciproquement. Selon l'invention, l'avancée s'étend sur toute la largeur du volet, qui est sa dimension prise le long de l'axe de rotation, ladite avancée ménageant un espace avec la deuxième partie. Cet espace permet à la deuxième portion du joint de venir s'immiscer entre l'avancée et la deuxième partie du volet, lorsque le volet est dans une position de fermeture. Il est important que l'avancée s'étende sur toute la largeur du volet de manière à faire totalement disparaître le jeu. Si l'avancée était inférieure à cette largeur, elle ne ferait que limiter le jeu à une zone plus réduite.

De façon préférentielle, la longueur de l'avancée, qui est sa dimension prise suivant une direction perpendiculaire au plan de l'épaulement, permet un chevauchement de ladite avancée avec la deuxième portion du joint lorsque le volet est dans une position de fermeture. L'avancée pourrait être dimensionnée au plus juste en permettant un contact dans le même plan, avec la deuxième portion du joint, sans chevauchement. Cette configuration, bien que possible, rendrait toutefois assez aléatoire la disparition du jeu, en raison d'un contact assez approximatif entre ladite avancée et ladite deuxième portion du joint. Un chevauchement assure un contact plus étroit et plus sûr entre l'avancée et la deuxième portion du joint, permettant de limiter les effets du jeu J entrevu.

De façon avantageuse, la surface de contact entre l'avancée et la deuxième portion du joint est plane. La mise en oeuvre d'une surface de contact étendue constitue une configuration optimisée pour assurer une bonne étanchéité entre l'avancée et le joint.

Préférentiellement, la longueur de l'avancée est inférieure à 5 millimètres. En effet, cette avancée n'ayant que pour seule fonction d'être mise en contact avec la deuxième portion du joint, doit être dimensionnée au plus juste, afin d'éviter d'alourdir le volet et d'entraver son mécanisme de rotation. Il est rappelé que la longueur de l'avancée est sa dimension prise selon une direction perpendiculaire au plan de l'épaulement.

Selon un mode de réalisation préféré d'une vanne selon l'invention, la première et la deuxième partie du volet, ainsi que l'avancée, forment une seule et même pièce. Il s'agit de la configuration de volet la plus facile et la plus rapide à fabriquer, et donc la moins onéreuse.

Avantageusement, la deuxième portion du joint est pleine.

De façon préférentielle, l'avancée est déformable pour améliorer les conditions de contact avec la deuxième portion du joint. En effet, puisque le joint est généralement lui aussi déformable, le contact entre ces deux éléments déformables va être optimisé, et va donc améliorer les conditions d'étanchéité de la vanne.

De façon avantageuse, la section transversale de l'avancée est rectangulaire. Il est supposé que l'axe longitudinal de l'avancée est parallèle à l'axe de rotation du volet. Une avancée parallélépipédique rectangle est facile à usiner, et est performante par rapport à l'objectif visé, en présentant une surface de contact plane avec la deuxième portion du joint.

Les vannes selon l'invention présentent l'avantage d'être performantes en termes d'étanchéité, grâce à un aménagement structurel simple, rapide à mettre en oeuvre et peu encombrant, réalisé sur le volet. Elles ont de plus l'avantage, d'offrir une fonctionnalité supplémentaire à travers cette étanchéité améliorée, tout en demeurant d'un coût sensiblement constant.

On donne ci-après, une description détaillée d'un mode de réalisation préféré d'une vanne selon l'invention, en se référant aux dessins annexés sur lesquels :
- La figure 1, est une vue schématique et en perspective du volet équipant une vanne de contrôle moteur selon l'état de la technique,
- La figure 2 est une vue schématique et en perspective du volet équipant une vanne de contrôle moteur selon l'invention.

La figure 1 a déjà été décrite.

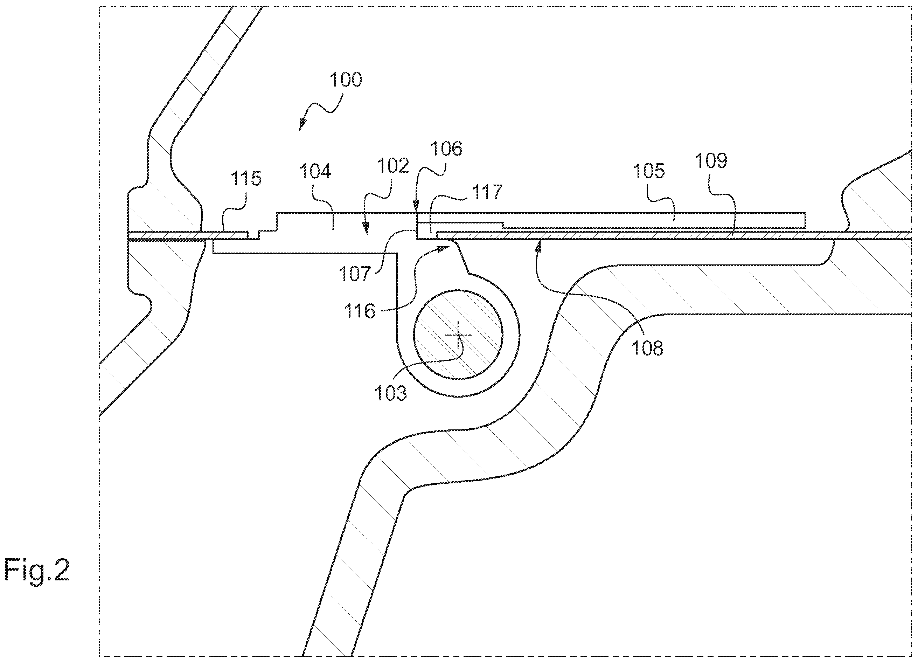

En se référant à la figure 2, une vanne 100 de contrôle moteur selon l'invention comprend un volet 102 monté pivotant autour d'un axe de rotation 103. Le volet 102 est constitué d'une première partie 104 et d'une deuxième partie 105, lesdites parties 104,105 étant reliées l'une à l'autre de façon rigide et en continuité l'une de l'autre. Le volet 102 a globalement une forme rectangulaire, dont l'axe longitudinal est perpendiculaire à l'axe de rotation 103, ledit axe 103 traversant ledit volet 102 de façon asymétrique. Ainsi, la première partie 104 a une forme rectangulaire, dont l'axe longitudinal est parallèle à l'axe de rotation 103, et la deuxième partie 105 a également une forme rectangulaire, dont l'axe longitudinal est perpendiculaire audit axe 103 de rotation. La deuxième partie 105 du volet 102 possède une épaisseur constante, sauf sur la partie 117, tandis que la première partie 104 présente une épaisseur variable. En effet, l'épaisseur de la première partie 104 croît progressivement le long de l'axe longitudinal du volet 102, en partant d'une épaisseur minimale au niveau d'un bord libre 115 dudit volet 102, pour atteindre une valeur maximale au niveau de la zone de jonction 106 des deux parties 104,105 du volet 102. L'épaisseur de la première partie 104 du volet 102 est supérieure à celle de la deuxième partie 105 au niveau de leur zone de jonction 106, si bien qu'elle crée un épaulement 107 plan entre lesdites parties 104,105, qui s'étend entre la deuxième partie 105 dudit volet 102 et l'axe de rotation 103, dans un plan perpendiculaire à ladite deuxième partie 105. Cet épaulement 107 est prolongé par une avancée 116, prise le long de l'axe de rotation 103, ladite avancée saillant dudit épaulement 107, parallèlement à ladite deuxième partie 105. Cette avancée 116 constitue une pièce allongée, dont l'axe longitudinal est parallèle à l'axe de rotation 103 du volet 102, et dont la section transversale est rectangulaire. Cette avancée 116 constitue pour la première partie 104 du volet 102, un bourrelet saillant ménageant avec la deuxième partie 105 du volet 102, un espace libre 117 de largeur constante. La longueur de l'avancée 116, prise suivant une direction perpendiculaire au plan de l'épaulement 107, est inférieure à 5 millimètres. La première partie 104, la deuxième partie 105 et l'avancée 116 constituent une seule et même pièce. Le joint 108 de la structure interne de la vanne 100, contre lequel vient en appui le volet 102, lorsque celui-ci est dans une position de fermeture, comprend une première portion 115 apte à interagir avec la première partie 104 du volet 102, et une deuxième portion 109 destinée à interagir avec la deuxième partie 105 du volet 102. Les deux portions sont planes et en continuité l'une de l'autre, pour former un joint 108 plan, en une seule pièce. La première portion du joint 108 comprend une ouverture, dont les dimensions sont sensiblement égales à la section de passage des gaz dans la vanne 100. Par ailleurs, la deuxième portion 109 du joint 108 est pleine.

Quand le volet 102 est dans une position de fermeture, l'avancée 116 de la première partie 104 du volet 102 se retrouve contre la deuxième portion 109 du joint 108, en établissant un contact surfacique avec ladite portion 109, et prémunissant la vanne contre les fuites créées par le jeu J sur les vannes de l'état de la technique entre le volet 2 et le joint 108.

## Revendications

1. Vanne (100) pour circuit d'air d'un moteur thermique, comprenant un volet (102) monté pivotant sur un axe (103) séparant ledit volet (102) en une première partie (104) et une deuxième partie (105) se joignant au niveau d'un plan d'interface (106) définissant un épaulement (107) plan, ledit volet (102) étant apte à occuper une position de fermeture pour stopper le passage des gaz, et pour laquelle la première partie (104) interagit avec une première portion d'un joint (108) et la deuxième partie (105) interagit avec une deuxième portion (109) de ce joint (108), ledit joint (108) étant solidaire de la structure interne de la vanne (100), la première partie (104) du volet (102) comprenant une avancée (116) qui prend naissance sur l'épaulement (107) et qui s'étend parallèlement à la deuxième partie (105) dudit volet (102),
l'avancée (116) s'étendant sur toute la largeur du volet (102), qui est sa dimension prise le long de l'axe de rotation (103), et ladite avancée (116) ménageant un espace (117) avec la deuxième partie (105),
la vanne étant **caractérisée en ce que** le joint (108) est plan et en une seule pièce.

2. Vanne selon la revendication 1, la longueur de l'avancée (116), qui est sa dimension prise selon une direction perpendiculaire au plan de l'épaulement (107), permettant un chevauchement de ladite avancée (116) avec la deuxième portion (109) du joint (108), lorsque le volet (102) est dans une position de fermeture.

3. Vanne selon la revendication 1 ou 2, la surface de contact entre l'avancée (116) et la deuxième portion (109) du joint (108) étant plane.

4. Vanne selon l'une quelconque des revendications 1 à 3, la longueur de l'avancée (116) étant inférieure à 5 millimètres.

5. Vanne selon l'une quelconque des revendications 1 à 4, la première (104) et la deuxième partie (105) du volet (102), ainsi que l'avancée (116) formant une seule et même pièce.

6. Vanne selon l'une quelconque des revendications 1 à 5, la deuxième portion (109) du joint (108) étant pleine.

7. Vanne selon l'une quelconque des revendications 1 à 3, l'avancée (116) étant déformable pour améliorer les conditions de contact avec la deuxième portion (109) du joint (108).

8. Vanne selon l'une quelconque des revendications 1 à 8, la section transversale de l'avancée (116) étant rectangulaire.

9. Vanne selon l'une quelconque des revendications précédentes, étant configurée de manière à ce que l'interaction entre le volet (102) et le joint (108) induise une déformation du joint (108) et non une compression de ce dernier.

10. Vanne selon la revendication 9, les portions (108, 109) du joint interagissant avec le volet (102) étant disposées en porte à faux par rapport à la structure interne de la vanne.

11. Vanne selon l'une quelconque des revendications précédentes, étant une vanne trois voies.

12. Vanne selon l'une quelconque des revendications précédentes, l'axe (103) étant déporté par rapport au volet (102).

## Patentansprüche

1. Ventil (100) für den Luftkreislauf eines Verbrennungsmotors mit einer Klappe (102), die schwenkbar an einer Achse (103) montiert ist, welche die Klappe (102) in einen ersten Teil (104) und einen zweiten Teil (105) teilt, die sich an einer Schnittstellenebene (106) treffen, die eine ebene Schulter (107) definiert, wobei die Klappe (102) geeignet ist, eine Schließstellung einzunehmen, um den Durchfluss der Gase zu stoppen, und bei welcher der erste Teil (104) mit einem ersten Bereich einer Dichtung (108) interagiert und der zweite Teil (105) mit einem zweiten Bereich (109) dieser Dichtung (108) interagiert, wobei die Dichtung (108) fest mit der inneren Struktur des Ventils (100) verbunden ist, wobei der erste Teil (104) der Klappe (102) einen Vorsprung (116) umfasst, der an der Schulter (107) beginnt und sich parallel zum zweiten Teil (105) der Klappe (102) erstreckt,
wobei sich der Vorsprung (116) über die gesamte Breite der Klappe (102) erstreckt, die ihr Maß entlang der Drehachse (103) ist, und der Vorsprung (116) mit dem zweiten Teil (105) einen Raum (117) bildet,
wobei das Ventil **dadurch gekennzeichnet ist, dass** die Dichtung (108) eben und einteilig ist.

2. Ventil nach Anspruch 1, wobei die Länge des Vorsprungs (116), die sein Maß in eine Richtung senkrecht zur Ebene der Schulter (107) ist, eine Überlappung des Vorsprungs (116) mit dem zweiten Bereich (109) der Dichtung (108) ermöglicht, wenn sich die Klappe (102) in einer Schließstellung befindet.

3. Ventil nach Anspruch 1 oder 2, wobei die Kontaktfläche zwischen dem Vorsprung (116) und dem zweiten Bereich (109) der Dichtung (108) eben ist.

4. Ventil nach einem beliebigen der Ansprüche 1 bis 3, wobei die Länge des Vorsprungs (116) weniger als 5 Millimeter beträgt.

5. Ventil nach einem beliebigen der Ansprüche 1 bis 4, wobei der erste Teil (104) und der zweite Teil (105) der Klappe (102) sowie der Vorsprung (116) ein einziges Teil bilden.

6. Ventil nach einem beliebigen der Ansprüche 1 bis 5, wobei der zweite Bereich (109) der Dichtung (108) vollwandig ist.

7. Ventil nach einem beliebigen der Ansprüche 1 bis 3, wobei der Vorsprung (116) verformbar ist, um die Kontaktbedingungen mit dem zweiten Bereich (109) der Dichtung (108) zu verbessern.

8. Ventil nach einem beliebigen der Ansprüche 1 bis 8, wobei der Querschnitt des Vorsprungs (116) rechteckig ist.

9. Ventil nach einem beliebigen der vorhergehenden Ansprüche, das so ausgestaltet ist, dass die Interaktion zwischen der Klappe (102) und der Dichtung (108) zu einer Verformung der Dichtung (108) und nicht zu deren Stauchung führt.

10. Ventil nach Anspruch 9, wobei die Bereiche (108, 109) der Dichtung, die mit der Klappe (102) interagieren, in Bezug auf die innere Struktur des Ventils vorkragend angeordnet sind.

11. Ventil nach einem beliebigen der vorhergehenden Ansprüche, das ein Dreiwegeventil ist.

12. Ventil nach einem beliebigen der vorhergehenden Ansprüche, wobei die Achse (103) in Bezug auf die Klappe (102) versetzt ist.

## Claims

1. Valve (100) for the air supply circuit of an internal combustion engine, comprising a flap (102) pivotally mounted on an axis (103) separating the said flap (102) into a first part (104) and a second part (105) that are joined together at an interface plane (106) defining a planar shoulder (107), the said flap (102) being capable of occupying a closed position in order to interrupt the passage of the gases, and for which purpose the first part (104) interacts with a first portion of a joint (108) and the second part (105) interacts with a second portion (109) of this joint (108), the said joint (108) being integral with the internal structure of the valve (100), the first part (104) of the flap (102) comprising an overhang (116) that arises on the shoulder (107) and extends parallel to the second part (105) of the said flap (102), the overhang (116) extending over the entire width of the flap (102), this being its dimension measured along the axis of rotation (103), and the said overhang (116) providing a space (117) together with the second part (105), the valve being **characterized in that** the joint (108) is planar and made of a single component.

2. Valve according to Claim 1, the length of the overhang (116), this being its dimension measured in a direction perpendicular to the plane of the shoulder (107), permitting an overlap of the said overhang (116) with the second portion (109) of the joint (108) when the flap (102) is in a closed position.

3. Valve according to Claim 1 or 2, the contact surface between the overhang (116) and the second portion (109) of the joint (108) being planar.

4. Valve according to one of Claims 1 to 3, the length of the overhang (116) being less than 5 millimeters.

5. Valve according to one of Claims 1 to 4, the first (104) and the second part (105) of the flap (102), together with the overhang (116), forming one and the same component.

6. Valve according to one of Claims 1 to 5, the second portion (109) of the joint (108) being solid.

7. Valve according to one of Claims 1 to 3, the overhang (116) being deformable in order to improve the conditions of contact with the second portion (109) of the joint (108).

8. Valve according to one of Claims 1 to 8, the cross section of the overhang (116) being rectangular.

9. Valve according to any one of the preceding claims, being configured in such a way that the interaction between the flap (102) and the joint (108) induces a deformation of the joint (108), rather than a compression of the latter.

10. Valve according to Claim 9, the portions (108, 109) of the joint interacting with the flap (102) being arranged in a cantilevered manner in relation to the internal structure of the valve.

11. Valve according to any one of the preceding claims, being a three-way valve.

12. Valve according to any one of the preceding claims, the axis (103) being offset in relation to the flap (102).
